# EUROPEAN PATENT APPLICATION

(11) **EP 4 411 231 A1**
(43) Date of publication of application: **07.08.2024**
(21) Application number: 24155600.0
(22) Date of filing: 02.02.2024
(51) Int. Cl.: F23R 3/14, F23R 3/28

(54) **INJECTOR WITH SWIRLER FOR HYDROGEN-DRIVEN GAS TURBINE ENGINE**

(30) Priority: 02.02.2023 US 202363482832 P
(71) Applicant: PRATT & WHITNEY CANADA CORP., Longueuil, Québec J4G 1A1 (CA)
(72) Inventor: HU, Tin Cheung John, Ontario, L6B 1B6 (CA)
(74) Representative: Dehns

(57) **Abstract**

An injector (38) for introducing hydrogen and air into a combustion chamber (40) of a gas turbine engine (20) includes a convergent-divergent nozzle head (42), a fuel swirler (46), and a gas swirler (50). The convergent-divergent nozzle head (42) is arranged along a nozzle axis (A2) and has an upstream end that defines an inlet mouth (44a). The swirler head (50) is arranged along the nozzle axis (A2) upstream of the inlet mouth (44a) and is configured to swirl flow of the hydrogen into the convergent-divergent nozzle head (42). The gas swirler head (50) is upstream of the inlet mouth (44a) and is configured to feed the gas into the convergent-divergent nozzle head (42).

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-pressure and temperature exhaust gas flow. The high-pressure and temperature exhaust gas flow expands through the turbine section to drive the compressor and the fan section. The compressor section may include low and high pressure compressors, and the turbine section may also include low and high pressure turbines.

Present gas turbine engines use liquid hydrocarbon fuels (LHF). LHF is provided through a fuel supply system and introduced into the combustor by liquid injectors. The fuel supply system and liquid injectors are designed for handling and efficient burning of the LHF. For instance, as liquid is much denser than the air (gas) it is to be mixed with, it is necessary for the liquid injectors to atomize the LHF into tiny droplets in order to facilitate more uniform burning.

### SUMMARY

An injector according to an example of the present disclosure includes a convergent-divergent nozzle head, a fuel swirler, and a gas swirler. The convergent-divergent nozzle head is arranged along a nozzle axis and has an upstream end that defines an inlet mouth. The swirler head is arranged along the nozzle axis upstream of the inlet mouth and is configured to swirl flow of the hydrogen into the convergent-divergent nozzle head. The gas swirler head is upstream of the inlet mouth and is configured to feed the gas into the convergent-divergent nozzle head.

A gas turbine engine according to an example of the present disclosure includes a combustor section that has a combustion chamber, a hydrogen source, and an injector as in any of the foregoing examples.

The present disclosure may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a gas turbine engine.
Figure 2 illustrates an injector and combustor chamber of the engine.
Figure 3 illustrates an isolated view of an example injector.
Figure 4 illustrates an axial view of a fuel swirler head of the injector.
Figure 5 illustrates an isolated view of another example injector.
Figure 6 illustrates an axial view of a fuel swirler head of the injector of Figure 5.
Figure 7 illustrates a surface-treated surface to facilitate mixing.
Figure 8 illustrates a feed channel that has a metallic foam.

In this disclosure, like reference numerals designate like elements where appropriate and reference numerals with the addition of one-hundred or multiples thereof designate modified elements that are understood to incorporate the same features and benefits of the corresponding elements.

### DETAILED DESCRIPTION

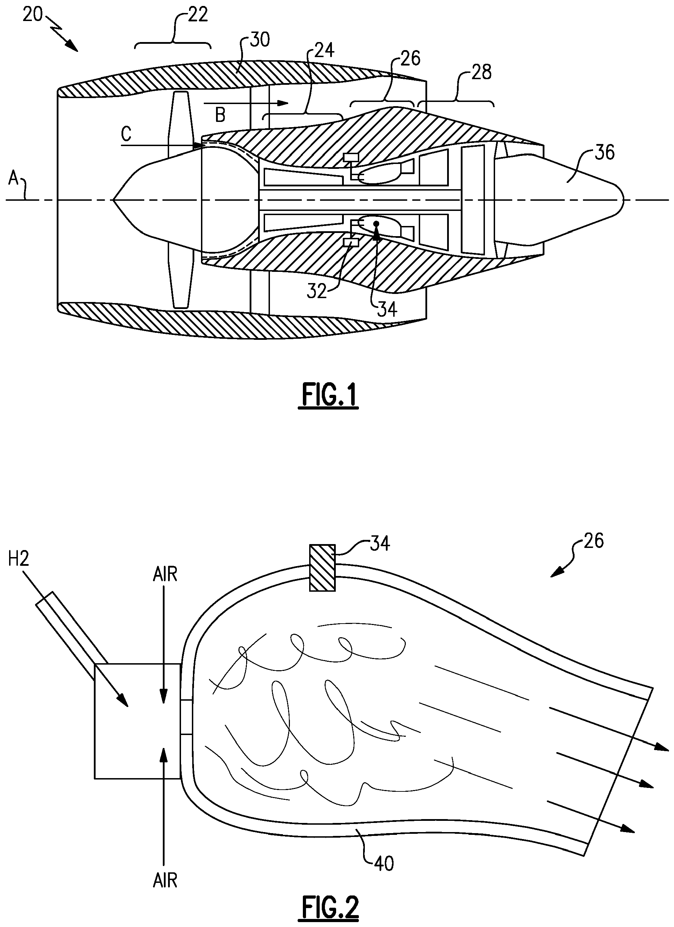

Figure 1 schematically illustrates a gas turbine engine 20. The example gas turbine engine 20 is a turbofan that generally incorporates a fan section 22, a compressor section 24, a combustor section 26, and a turbine section 28. The fan section 22 drives air along a bypass flow path B in a bypass duct defined within a nacelle 30. The turbine engine 20 intakes air along a core flow path C into the compressor section 24 for compression and communication into the combustor section 26. In the combustor section 26, the compressed air or other combustion gas is mixed with fuel from a fuel system 32 and ignited by igniter 34 to generate an exhaust gas flow that expands through the turbine section 28 and is exhausted through exhaust nozzle 36. Although depicted as a turbofan turbine engine in the disclosed non-limiting embodiment, it should be understood that the concepts described herein are not limited to use with turbofans as the teachings may be applied to other types of turbine engines. As one example, rather than having the propulsor be an enclosed fan, the propulsor may be an open propeller.

While present gas turbine engines use liquid hydrocarbon fuels (LHF), the engine 20 of the present disclosure is designed to use gaseous fuel, such as hydrogen, in the fuel system 32. In this regard, the fuel system 32 may carry liquid cryogenic hydrogen or gaseous hydrogen, both of which are provided to the combustor section 26 as gaseous hydrogen. A challenge to using hydrogen is that because it is a gas, its handling and combustion properties differ from that of LHF. For instance, hydrogen does not require atomization like a liquid, and hydrogen has higher flammability and different flame characteristics than LHF. Accordingly, injector nozzles that are designed for hydrogen are needed. In these regards, the engine 20 includes one or more injectors 38 for introducing the hydrogen fuel into the combustor section 26.

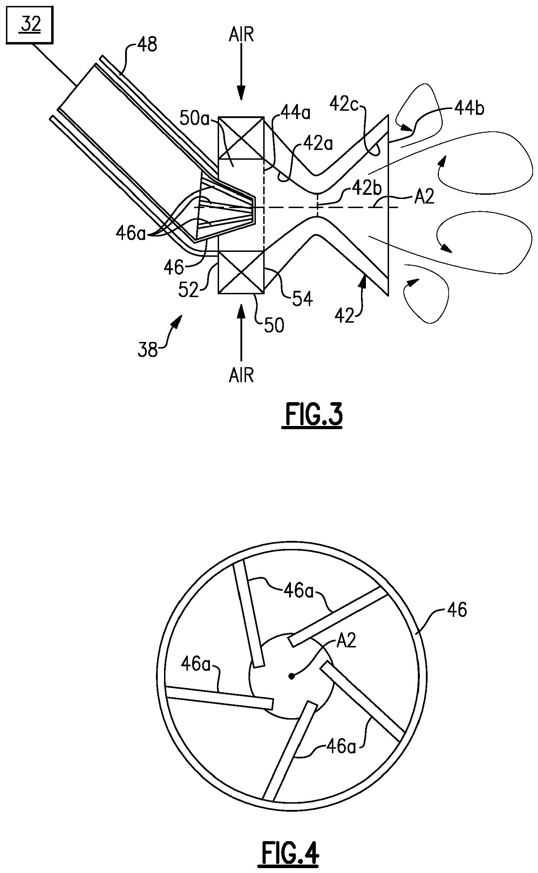

The injector 38 is arranged on a combustion chamber 40 of the combustor section 26 for introducing hydrogen and a combustion gas (e.g., air in the examples herein). Figure 3 illustrates an isolated view of an example of the injector 38. The injector 38 includes a nozzle head 42 that defines a nozzle axis A2. In this example, the nozzle head 42 is a convergent-divergent nozzle that includes, in fluid communication in series, a convergent section 42a that has an inlet mouth 44a at its upstream end. The convergent section 42a narrows to a throat 42b, which then expands into a divergent section 42c. The divergent section 42c defines an exit 44b into the combustion chamber 40. The divergent section 42c and the exit 44b are to be optimized for the fuel-air mixture injection angle into the combustor, control of the strength of the central recirculating flows, and durability of the nozzle 42, i.e. surface combustion within or at the lip of the fuel nozzle.

The injector 38 further includes a fuel swirler head 46 arranged along the nozzle axis A2 upstream of the inlet mouth 44a and configured to swirl a flow of the hydrogen to the inlet mouth 44a. A feed conduit 48 connects the fuel swirler head 46 with the fuel system 32 (hydrogen source). A "conduit" as used herein is defined by one or more structures that together convey a fluid from one point to another. For example, a conduit conveying fluid from point A to point B may include one of, or a combination of: a tube, an aperture defined through a part of an engine, a filter, a pump, and so on, depending on the application and context as would be understood by a person of ordinary skill in the art reading the present disclosure. The points of injection into the airstream upstream of mouth 44a are at a higher radius above the nozzle central axis A2 for optimum fuel-air mixing.

The fuel swirler head 46 includes a plurality of feed conduits 46a. As shown in Figure 4, each of the feed conduits 46a is radially and tangentially sloped with respect to the nozzle axis A2. The slope of the conduits 46a imparts a swirling flow on the hydrogen as it is discharged into the nozzle head 42. As shown, the fuel swirler head 46 includes five conduits 46a that are configured to provide a counter-clockwise swirl, but it is to be understood that the fuel swirler head 46 may include three, four, or more than five conduits 46a, and that the conduits 46a may alternatively be oppositely configured to induce a clockwise swirl.

The injector 38 also includes a gas swirler head 50 (Figure 3) arranged about the fuel swirler head 46 upstream of the inlet mouth 44a of the nozzle head 42. The gas swirler head 50 is an annulus that circumscribes an interior region 50a and has axially aft and axially forward faces 52/54. The fuel swirler head 46 extends through the aft face 52 into the interior region 50a, and the forward face 54 is flush with the inlet mouth 44a to serve as an exit for discharge of air into the nozzle head 42. In this regard, the interior region 50a of the annulus and the inlet mouth 44a may have equivalent diameters to each other. Although not shown, the gas swirler head 50 includes one or more conduits that are connected to a gas source, such as air from the compressor section 24, for feeding combustion gas into the interior region 50a, where the gas swirls and mixes with hydrogen. The hydrogen and gas are injected through the throat 42b of the nozzle head 42 into the combustion chamber 40. The swirling imparted by the swirler heads 46/50, coupled with the flow through the nozzle head 42, facilitates mixing of the hydrogen and gas for good combustion.

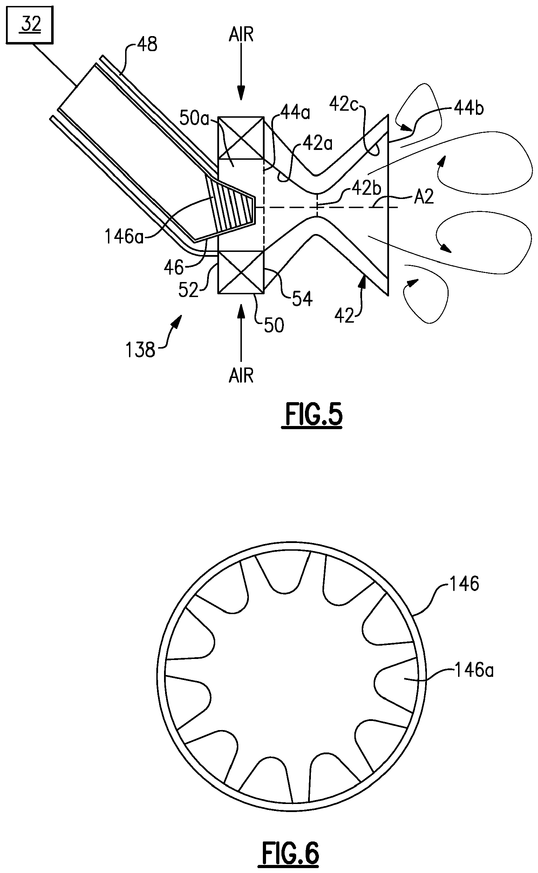

Figure 5 illustrates another example nozzle 138, which also includes the nozzle head 42 but a different fuel swirler head 146. The fuel swirler head 146 includes at least one helical feed conduit 146a, which is also depicted in an axial view in Figure 4. The helical feed conduit 146a imparts a swirling flow on the hydrogen as it is discharged to the nozzle head 42. The fuel swirler head 146 may include a single one of the helical feed conduits 146a that is configured to provide a counter-clockwise swirl, but it is to be understood that the fuel swirler head 146 may include two, three, or more than three conduits 146a, and that the conduits 146a may alternatively be oppositely configured to induce a clockwise swirl. A single one of the helical feed conduits 146a may extend at least one full revolution about the axis A. If there are multiple helical feed conduits 146a, each channel 146a may extend a full revolution or a partial revolution about the axis A2.

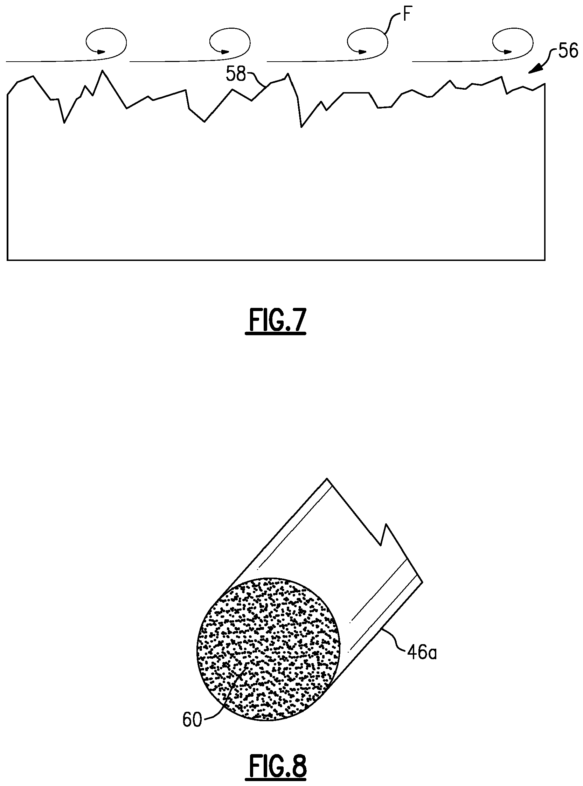

In further examples, select surfaces of the injector 38/138 that are in contact with hydrogen or gas may be surface-treated to further enhance mixing. Figure 7 shows an example surface 56, which may be a surface of the feed conduits 46a/146a, the surface of the conduits of the air swirler head 50, and/or the surface of the nozzle head 42. The surface 56 has been treated to have a surface roughness 58 of 5-10 µm Ra. The surface roughness 58 induces turbulent flow F, contributing to mixing of the hydrogen and air.

In further examples, the fuel swirler head 46/146 also serves as a flame arrestor, allowing feed flow of hydrogen but facilitating the prevention of flame propagation back through the feed conduit 48. For example, as shown in Figure 8, the feed conduit 46a (or 146a) includes an open-cell metallic foam 60 disposed therein. For instance, the open-cell metallic foam 60 is formed of an alloy that has low susceptibility to hydrogen embrittlement, such as but not limited to, stainless steel or nickel alloy, and which is corrosion resistant and temperature resistant at the expected operating conditions. Cell size of the open-cell metallic foam 60 is chosen to avoid flashback

This disclosure may be further understood in view of the following examples. An injector 38/138 for a gas turbine engine 20 according to an example of the present disclosure includes a convergent-divergent nozzle head 42 arranged along a nozzle axis A2 and having an upstream end defining an inlet mouth 44a. There is a fuel swirler head 46 arranged along the nozzle axis A2 upstream of the inlet mouth 44a that is configured to swirl flow of hydrogen into the convergent-divergent nozzle head 42. There is also a gas swirler head 50 upstream of the inlet mouth 44a that is configured to feed gas into the convergent-divergent nozzle head 42.

In a further example of the foregoing example, the fuel swirler head 46 includes a plurality of feed conduits 46a, and each of the feed conduits 46a is radially and tangentially sloped with respect to the nozzle axis A2.

In a further example of any of the foregoing examples, the fuel swirler head 46 includes at least one helical feed conduit 146a.

In a further example of any of the foregoing examples, the fuel swirler head 46 includes a feed conduit surface 56, the convergent-divergent nozzle head 42 includes a nozzle surface 56, and the feed conduit surface and the nozzle surface 52 have surface roughnesses 58 of at least 100-300Ra.

In a further example of any of the foregoing examples, the gas swirler head 50 is an annulus that circumscribes an interior region 50a and has aft and forward faces 52/54, the fuel swirler head 46 extends through the aft face 52 into the interior region 50a, and the forward face 54 has an exit for discharge of gas to the inlet mouth 44a of the convergent-divergent nozzle head 42.

In a further example of any of the foregoing examples, the forward face 52 is flush with the inlet mouth 44a of the convergent-divergent nozzle head 42.

In a further example of any of the foregoing examples, the inlet mouth 44a of the convergent-divergent nozzle head 42 and the interior region 50a of the annulus have equivalent diameters to each other.

In a further example of any of the foregoing examples, the fuel swirler head 46 includes at least one feed conduit 46a and an open-cell metallic foam 60 disposed in the at least one feed conduit 46a.

In a further example of any of the foregoing examples, the open-cell metallic foam 60 is formed of stainless steel or nickel alloy.

A gas turbine engine 20 according to an example of the present disclosure includes a combustor section 26 that has a combustion chamber 40, a hydrogen source 32, and an injector 38/138 as in any of the foregoing examples.

Although a combination of features is shown in the illustrated examples, not all of them need to be combined to realize the benefits of various embodiments of this disclosure. In other words, a system designed according to an embodiment of this disclosure will not necessarily include all of the features shown in any one of the figures or all of the portions schematically shown in the figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. An injector (38) for a gas turbine engine (20) comprising:
a convergent-divergent nozzle head (42) arranged along a nozzle axis (A2) and having an upstream end defining an inlet mouth (44a);
a fuel swirler head (46; 146) arranged along the nozzle axis (A2) upstream of the inlet mouth (44a) and configured to swirl flow of hydrogen into the convergent-divergent nozzle head (42); and
a gas swirler head (50) upstream of the inlet mouth (44a) and configured to feed gas into the convergent-divergent nozzle head (42).

2. The injector (38) as recited in claim 1, wherein the fuel swirler head (46) includes a plurality of feed conduits (46a), and each of the feed conduits (46a) is radially and tangentially sloped with respect to the nozzle axis (A2).

3. The injector (38) as recited in claim 1, wherein the fuel swirler head (146) includes at least one helical feed conduit (146a).

4. The injector (38) as recited in claim 1, 2 or 3, wherein the fuel swirler head (46; 146) includes a feed conduit surface (56), the convergent-divergent nozzle head (42) includes a nozzle surface (56), and the feed conduit surface (56) and the nozzle surface (56) have surface roughnesses (58) of 5-10 µm Ra.

5. The injector (38) as recited in any preceding claim, wherein the gas swirler head (50) is an annulus that circumscribes an interior region (50a) and has aft and forward faces (52, 54), the fuel swirler head (46; 146) extends through the aft face (52) into the interior region (50a), and the forward face (54) has an exit for discharge of gas to the inlet mouth (44a) of the convergent-divergent nozzle head (42).

6. The injector (38) as recited in claim 5, wherein the forward face (54) is flush with the inlet mouth (44a) of the convergent-divergent nozzle head (42).

7. The injector (38) as recited in claim 5 or 6, wherein the inlet mouth (44a) of the convergent-divergent nozzle head (42) and the interior region (50a) of the annulus have equivalent diameters to each other.

8. The injector (38) as recited in any preceding claim, wherein the fuel swirler head (46; 146) includes at least one feed conduit (46a; 146a) and an open-cell metallic foam (60) disposed in the at least one feed conduit (46a; 146a).

9. The injector (38) as recited in claim 8, wherein the open-cell metallic foam (60) is formed of stainless steel or nickel alloy.

10. A gas turbine engine (20) comprising:
a combustor section (26) having a combustion chamber (40);
hydrogen source (32); and
the injector (38) of any preceding claim for introducing hydrogen from the hydrogen source (32) and gas into the combustion chamber (40).

11. The gas turbine engine (20) as recited in claim 10, including a compressor section (24) providing air to the combustor section (26), a turbine section (28) in fluid communication with the combustor section (26), and a fan coupled to be driven by the turbine section (28).
